# EUROPÄISCHE PATENTSCHRIFT

(11) **EP 0 764 571 B1**
(45) Veröffentlichungstag und Bekanntmachung des Hinweises auf die Patenterteilung: **17.01.2001**
(21) Anmeldenummer: 96112000.3
(22) Anmeldetag: 25.07.1996
(51) Int. Cl.: B62D 21/11, B60G 25/00

(54) **Vorderachsquerträger für ein Kraftfahrzeug**
Transverse beam for a front axle of a motor vehicle
Traverse d'essieu avant d'un véhicule automobile

(30) Priorität: 20.09.1995 DE 19534907
(43) Veröffentlichungstag der Anmeldung: 26.03.1997
(73) Patentinhaber: Dr.Ing.h.c. F. Porsche Aktiengesellschaft, 70435 Stuttgart (DE)
(72) Erfinder: Söffge, Friedhelm, 71229 Leonberg (DE); Lippmann, Johannes, 71272 Renningen (DE); Schaible, Walter, 71282 Hemmingen (DE)

(56) Entgegenhaltungen:
- EP-A- 0 143 558
- EP-A- 0 530 594
- WO-A-90/05083
- FR-A- 2 615 458

## Beschreibung

Die Erfindung bezieht sich auf einen Vorderachsquerträger für ein Kraftfahrzeug nach dem Oberbegriff des Anspruchs 1.

Aus der DE 20 06 439 ist ein Vorderachsquerträger für ein Kraftfahrzeug mit einem angeflanschten Lenkgetriebe bekannt.

Aus der EP-A-0 143 558 ist es bereits bekannt, an einem Lenkgetriebegehäuse endseits Seitenträger vorzusehen, die Lageraufnahmen für Radführungslenker aufweisen. Zusätzlich ist am Lenkgetriebegehäuse eine Stützstrebe angeordnet, die mit der Karosserie verbunden ist. Die damit gebildete Baugruppe ist insgesamt über drei Verbindungspunkte, nämlich einem an der Stützstrebe und zweien an den Seitenträgern, mit der Karosserie verbunden.

Darüber hinaus ist aus der EP-A- 0 530 594 ein Fahrschemel für Kraftfahrzeuge bekannt geworden, bei dem zwei seitliche Rahmenelemente über mehrere Querträger miteinander verbunden sind. Einer der Querträger kann auch als Stellzylinder für eine Hinterradlenkung ausgeführt sein. Die gesamte Baugruppe ist über endseits an den seitlichen Rahmenelementen vorgesehene Verbindungspunkte mit der Karosserie verbunden.

Der Erfindung liegt die Aufgabe zugrunde, einer vordere Tragstruktur mit einem Vorderachsquerträger für ein Kraftfahrzeug zu schaffen, der gewichtsmäßig leicht ausgeführt ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß das Lenkgetriebe bzw. das Gehäuse des Lenkgetriebes als Teil des Vorderachsquerträgers verwendet wird. Hierzu ist es zwischen Ansätzen von Seitenträgern angeordnet und mit diesen über Befestigungsschrauben fest verbunden.

Zur Befestigung des Gehäuses an den Ansätzen der Seitenträger dienen Schrauben, die in gegenüberstehenden Stutzen der zu verbindenden Teile angeordnet sind. Gleichzeitig dienen diese Stutzen dazu, das eigentliche Lenkgetriebe oberhalb des Querträgers anzuordnen, damit die Spurstangen freigängig zwischen den Rädern geführt werden können.

Ein Verbindung des Lenkgetriebegehäuses mit den Ansätzen erfolgt bevorzugt über in den Stutzen eingesetzte Spannhülsen, die die Befestigungsschrauben über eine Teillänge aufnehmen. Von den Spannhülsen sowie von den Verbindungsschrauben werden auftretende Querkräfte übertragen.

Ein weiterer Vorteil eines mit den Seitenteilen verbundenen Lenkgetriebes besteht darin, daß eine Vormontageeinheit eines Vorderachsquerträgers geschaffen wird, der komplett zusammengebaut ins Fahrzeug einsetzbar ist.

Ein Ausführungsbeispiel der Erfindung ist in den Zeichnungen dargestellt und wird in folgendem näher beschrieben.

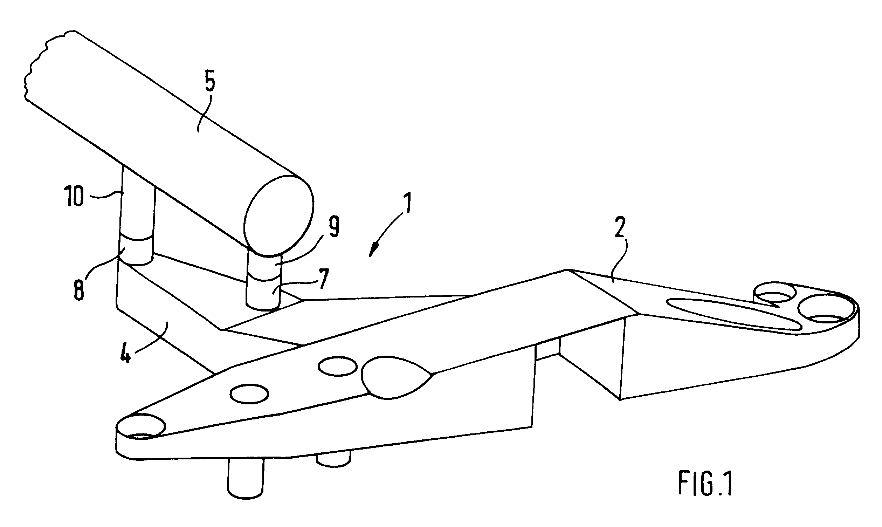

Es zeigen
- Fig. 1: eine perspektivische Darstellung auf einen Vorderachsquerträger mit integriertem Lenkgetriebe in schematischer Darstellung,

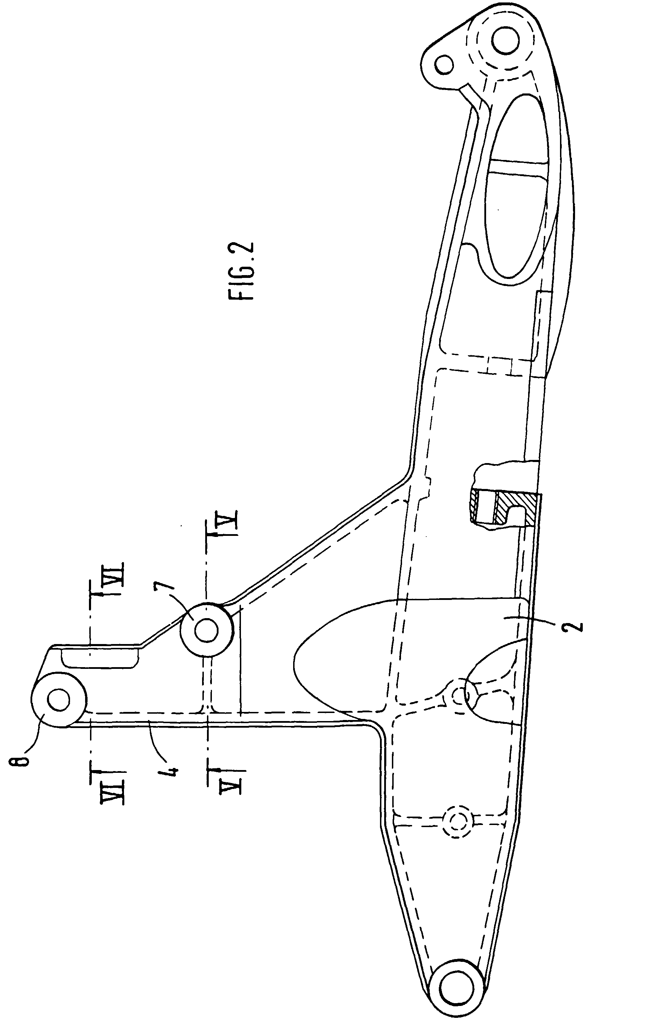

- Fig. 2: eine Draufsicht auf einen Seitenträger des Querträgers mit querverlaufenden Ansätzen,

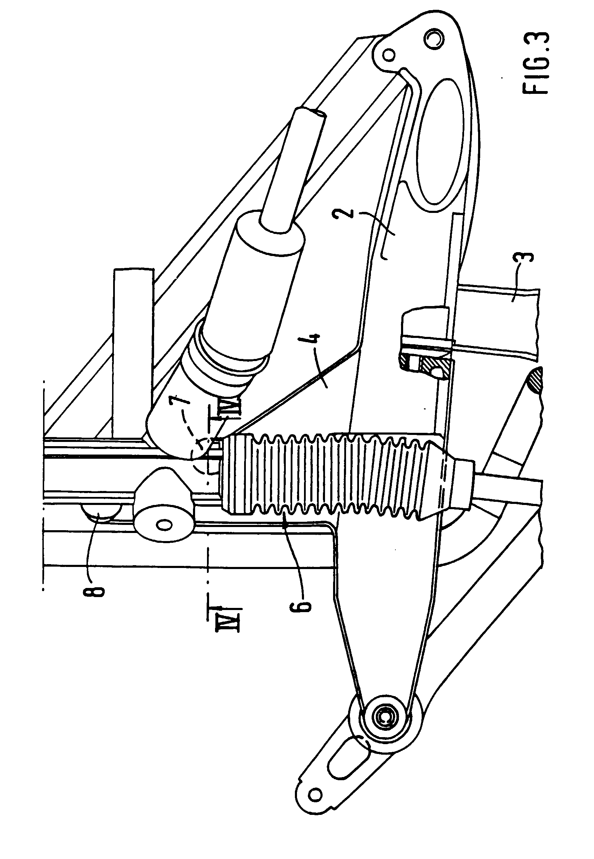

- Fig. 3: eine Draufsicht auf einen Seitenträger mit verbundener Lenkgetriebeeinheit,

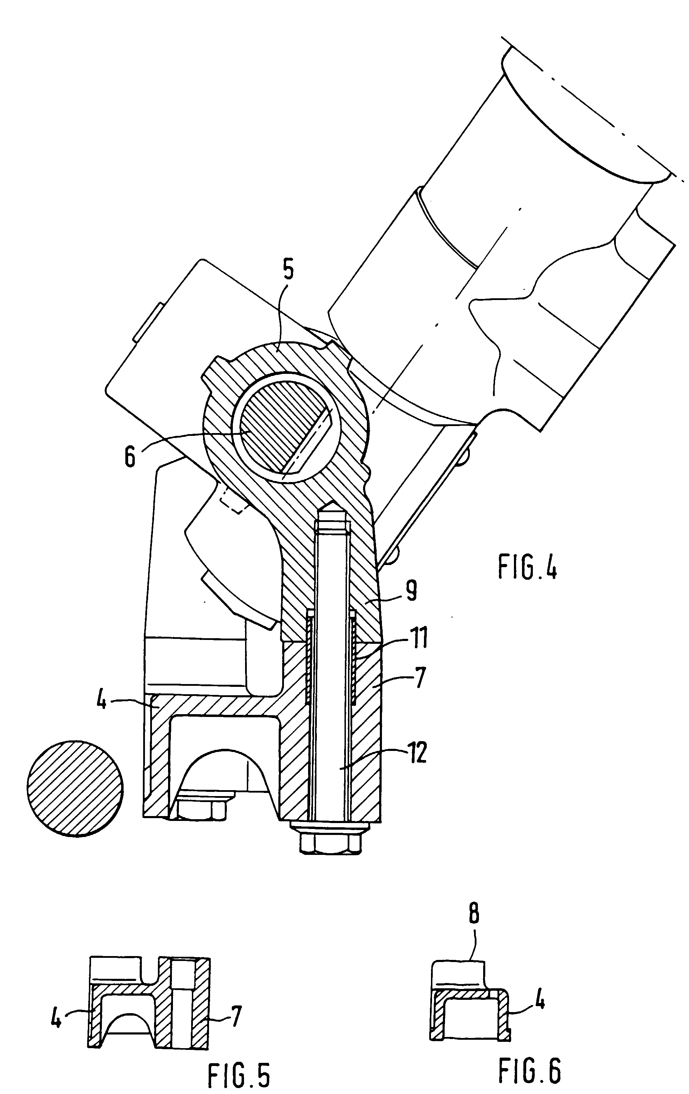

- Fig. 4: einen Schnitt nach der Linie IV-IV durch innenliegende Stutzen des Seitenträgers und des Lenkgetriebegehäuses in einer vergrößerten Darstellung,
- Fig. 5: einen Schnitt nach der Linie V-V durch einen innenliegenden Stutzen des Ansatzes und
- Fig. 6: einen Schnitt nach der Linie VI-VI durch einen außenliegenden Stutzen des Ansatzes.

Ein Vorderachsquerträger 1 für ein Kraftfahrzeug umfaßt zwei Seitenträger 2 in dem Lenker 3 einer Radaufhängung gelagert sind. An jeden Seitenträger 2 schließt sich ein quer zum Fahrzeug angeordneter Ansatz 4 an. Mit diesen Ansätzen 4 jeden Seitenträgers 2 ist ein Gehäuse 5 des Lenkgetriebes 6 verbunden, so daß sich ein querverlaufender Querträger ergibt, der eine Festigkeitseinheit bildet.

Zur Verbindung mit den Ansätzen 4 weisen diese mindestens einen ersten innenliegenden Stutzen 7 und mindestens einen zweiten außenliegenden Stutzen 8 auf, die sich vertikal nach oben erstrecken. Diese Stutzen sind jeweils etwa an den äußeren Kanten der Ansätze angeordnet bzw. ist der eine Stutzen 7 an der hinteren Kante des Ansatzes 4 und der Stutzen 8 endseitig des Ansatzes 4 vorgesehen. Diesen Stutzen 7, 8 der Ansätze 4 gegenüberstehend sind korrespondierende Stutzen 9, 10 des Lenkgetriebegehäuses 5 vorgesehen.

Zur Verbindung des Gehäuses 5 mit den Ansätzen 4 dienen in Bohrungen der Stutzen 7, 8 und 9, 10 eingesetzte Spannhülsen 11, die von Befestigungsschrauben 12 durchsetzt sind, welche in den Stutzen 9, 10 mittels Gewinde festsetzbar sind.

Durch die sich nach oben erstreckenden Stutzen 7, 8 ist eine Freigängigkeit der Spurstange zu den Rädern gegeben.

## Patentansprüche

1. Vorderachsquerträger für ein Kraftfahrzeug mit Lageraufnahmen für Radführungslenker und einem Lenkgetriebe, wobei der Vorderachsquerträger (1) aus einem Lenkgetriebegehäuse (5) mit verbundenen endseitigen Seitenträgern (2) gebildet wird, **dadurch gekennzeichnet, daß** an den Seitenträgern (2) in Fahrzeugquerrichtung verlaufende Ansätze (4) vorgesehen sind und daß zur Verbindung der Ansätze (4) mit dem Lenkgetriebegehäuse jeweils ein erster innenliegender Stutzen (7) und ein zweiter außenliegender Stutzen (8), die sich vertikal nach oben erstrecken, vorgesehen sind, wobei Befestigungsschrauben (12) in den Stutzen (7,8) angeordnet sind.

2. Vorderachsquerträger nach Anspruch 1, **dadurch gekennzeichnet**, daß an den Ansätzen (4) als Verbindungsaufnahmen (7, 8) wenigstens jeweils zwei Stutzen vorgesehen sind, die über Schrauben (12) mit korrespondierenden Stutzen (9, 10) des Lenkgetriebegehäuses (5) verbunden sind.

3. Vorderachsquerträger nach Anspruch 2, **dadurch gekennzeichnet,** daß die Stutzen (7, 8 und 9, 10) der Ansätze (4) und des Gehäuses (5) über Spannhülsen (11) gehalten sind, die einen Innendurchmesser entsprechend dem Bohrungsdurchmesser für die Spannschrauben (12) aufweisen.

4. Vorderachsquerträger nach Anspruch 2 oder 3, **dadurch gekennzeichnet,** daß die Stutzen (7, 8) einen inneren Verschraubungspunkt und einen äußeren Verschraubungspunkt für das Getriebegehäuse (5) bilden.

## Claims

1. A front-axle cross member for a motor vehicle with bearing receiving means for wheel-control arms and a steering gear, wherein the front-axle cross member (1) is formed from a steering-gear housing (5) with connected side supports (2) at the end, **characterized in that** attachments (4) extending in the transverse direction of the vehicle are provided on the side supports (2), and a respective first fitting (7) on the inside and a respective second fitting (8) on the outside, which extend vertically upwards, arc provided for connecting the attachments (4) to the steering-gear housing, wherein fastening bolts (12) are arranged in the fittings (7, 8).

2. A front-axle cross member according to Claim 1, **characterized in that** at least two respective fittings connected to corresponding fittings (9, 10) of the steering-gear housing (5) by way of bolts (12) are provided as connecting receiving means (7, 8) on the attachments (4).

3. A front-axle cross member according to Claim 2, **characterized in that** the fittings (7, 8 and 9, 10) of the attachments (4) and of the housing (5) are held by way of clamping sleeves (11) which have an internal diameter corresponding to the diameter of the bore for the clamping bolts (12).

4. A front-axle cross member according to Claim 2 or 3, **characterized in that** the fittings (7, 8) form an inner bolting point and an outer bolting point for the steering-gear housing (5).

## Revendications

1. Traverse d'essieu avant pour un véhicule automobile avec logements de palier pour des bras oscillants de guidage de roue et pour un mécanisme de direction, la traverse d'essieu avant (1) étant constituée d'une boîte de mécanisme de direction (5) avec poutres latérales (2) terminales reliées, caractérisée en ce que sur les poutres latérales (2) sont prévus des appendices (4) qui s'étendent dans la direction transversale du véhicule et en ce que pour la liaison des appendices (4) avec la boîte de mécanisme de direction, il est prévu pour chacun une première tubulure (7) située à l'intérieur et une deuxième tubulure (8) située à l'extérieur, qui s'étendent verticalement vers le haut, des vis de fixation (12) étant disposées dans les tubulures (7, 8).

2. Traverse d'essieu avant selon la revendication 1, caractérisée en ce qu'il est prévu sur chacun des appendices (4), comme logements de liaison (7, 8), au moins deux tubulures qui sont reliées par des vis (12) à des tubulures (9, 10) correspondantes de la boîte de mécanisme de direction (5).

3. Traverse d'essieu avant selon la revendication 2, caractérisée en ce que les tubulures (7, 8 et 29, 10) des appendices (4) et de la boîte (5) sont maintenues par des manchons de serrage (11) qui présentent un diamètre intérieur correspondant au diamètre du perçage destiné aux vis de serrage (12).

4. Traverse d'essieu avant selon la revendication 2 ou 3, caractérisée en ce que les tubulures (7, 8) forment un point de vissage intérieur et un point de vissage extérieur pour la boite de direction (5).
